# EUROPEAN PATENT SPECIFICATION

(11) **EP 4 440 004 B1**
(45) Date of publication and mention of the grant of the patent: **28.10.2026**
(21) Application number: 21965598.2
(22) Date of filing: 25.11.2021
(51) Int. Cl.: H04B 10/27, H04B 10/291, H04J 14/02, H04Q 11/00

(54) **OPTICAL COMMUNICATION DEVICE, OPTICAL COMMUNICATION SYSTEM, AND OPTICAL COMMUNICATION METHOD**
OPTISCHE KOMMUNIKATIONSVORRICHTUNG, OPTISCHES KOMMUNIKATIONSSYSTEM UND OPTISCHES KOMMUNIKATIONSVERFAHREN
DISPOSITIF DE COMMUNICATION OPTIQUE, SYSTÈME DE COMMUNICATION OPTIQUE ET PROCÉDÉ DE COMMUNICATION OPTIQUE

(43) Date of publication of application: 02.10.2024
(73) Proprietor: NTT, Inc., Tokyo 100-8116 (JP)
(72) Inventor: SHIBATA Naotaka, Musashino-shi, Tokyo 180-8585 (JP); KANEKO Shin, Musashino-shi, Tokyo 180-8585 (JP); KANAI Takuya, Musashino-shi, Tokyo 180-8585 (JP)
(74) Representative: Santarelli
(86) International application number: PCT/JP2021/043109
(87) International publication number: WO 2023/095226

(56) References cited:
- EP-A2- 1 263 257
- WO-A1-2012/126738
- WO-A1-2021/131202
- JP-A- 2005 311 708
- JP-A- 2008 244 647
- JP-A- 2009 284 304
- JP-A- 2015 008 437
- US-A1- 2011 020 001
- TSALAMANIS I ET AL: "Experimental demonstration of cascaded AWG access network featuring bi-directional transmission and polarization multiplexing", OPTICS EXPRESS,, vol. 12, no. 5, 8 March 2004 (2004-03-08), pages 764 - 769, XP002499470, DOI: 10.1364/OPEX.12.000764

## Description

### Technical Field

The present invention relates to an optical communication device, an optical communication system, and an optical communication method.

### Background Art

There has been conventionally proposed an optical communication device capable of relaying an optical signal in accordance with a destination while reducing delay (see, for example, Patent Literature 1). Fig. 8 illustrates a configuration example of an optical communication system 100 including a conventional optical communication device. The optical communication system 100 includes an optical SW 110 and a control unit 115 forming the optical communication device. A WDM filter 140 and the control unit 115 are connected to the optical SW 110.

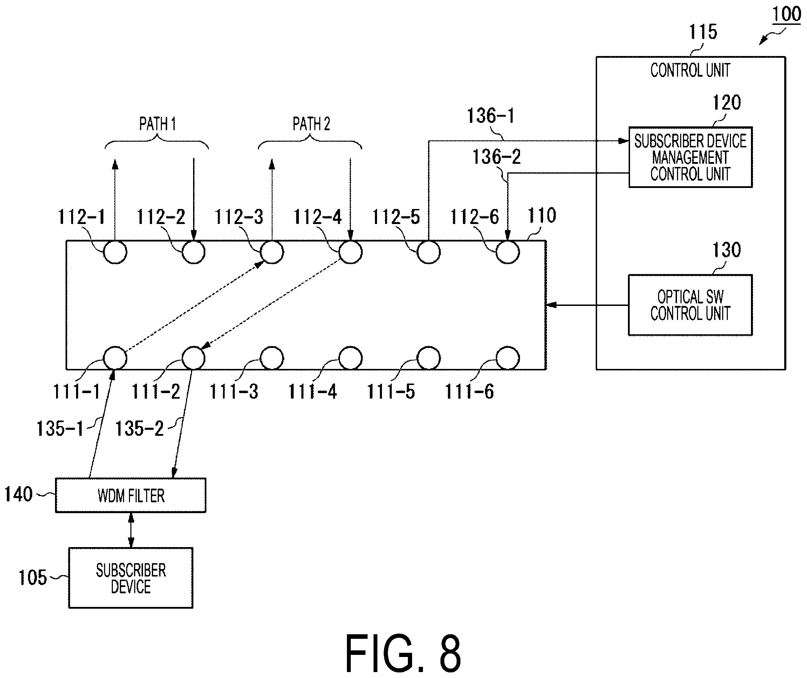

The optical SW 110 is connected to a plurality of optical transmission lines and outputs an optical signal input from any of the optical transmission lines to another optical transmission line. The optical SW 110 of Fig. 8 includes ports 111-1 to 111-6 and ports 112-1 to 112-6. The optical SW 110 and the WDM filter 140 are connected by a duplex optical transmission line. For example, the port 111-1 of the optical SW 110 and the WDM filter 140 are connected via an optical transmission line 135-1, and the port 111-2 of the optical SW 110 and the WDM filter 140 are connected via an optical transmission line 135-2.

The optical SW 110 and the control unit 115 are connected by a duplex optical transmission line. For example, the port 112-5 of the optical SW 110 and the control unit 115 are connected via an optical transmission line 136-1, and the port 112-6 of the optical SW 110 and the control unit 115 are connected via an optical transmission line 136-2.

The control unit 115 includes a subscriber device management control unit 120 and an optical SW control unit 130. The subscriber device management control unit 120 allocates a wavelength to a subscriber device 105. The optical SW control unit 130 switches the path of the optical SW 110.

Conventionally, regarding the number of optical transmission lines, in an optical access section between the subscriber device 105 connected to the WDM filter 140 and the optical SW 110, the uplink and the downlink are often set to simplex transmission with different wavelengths, but in the relay, the same wavelength is often used with separate uplink and downlink optical transmission lines. In the example illustrated in Fig. 8, it is assumed that an optical signal from the simplex subscriber device 105 is transmitted by duplex relay, and the optical signal is converted into duplex by the WDM filter 140. Since the wavelengths are different between the uplink and the downlink, the uplink and the downlink can be separated by changing the pass wavelength band of each port of the WDM filter.

Even in a case where the relay is simplex, arrayed waveguide grating (AWG) may be used to multiplex optical signals transmitted from a plurality of subscriber devices. Since the wavelength that can be accommodated for each port is fixed in the AWG, it is necessary to separate the uplink and the downlink once by the WDM filter 140 and connect to the AWG installed between the optical SW 110 and the optical transmission line through separate ports as in the configuration illustrated in Fig. 8.

In a sequence in which the subscriber device 105 first sends a control signal to the subscriber device management control unit 120 and the subscriber device management control unit 120 notifies the subscriber device 105 of the use wavelength, the uplink port can be identified by presence or absence of optical power by the control signal, but the downlink port corresponding to the subscriber device 105 cannot be found without prior information. Therefore, it is necessary to determine in advance where to set the downlink port with respect to the uplink port of a certain subscriber device 105. For example, it is necessary to determine in advance by a rule such as arranging the uplink and the downlink next to each other.

### Citation List

### Patent Literature

Patent Literature 1: WO 2021/131202 A
Patent Literature 2: EP 1 263 257 A2
Patent Literature 3: US 2011/020001 A1
Patent Literature 4: WO 2012/126738 A1

### Non-Patent Literature

Non-Patent Literature 1: Tsalamanis I. et al.: « Experimental demonstration of cascaded AWG access network featuring bi-directional transmission and polarization multiplexing", Optics Express, Vol. 12 No. 5, March 8, 2004, pages 764 - 769.

### Summary of Invention

### Technical Problem

An optical transceiver included in the subscriber device 105 is desirably a wavelength-tunable optical transmitter/receiver, and in that case, communication can be performed at an arbitrary wavelength. However, the available wavelength range is limited due to the pass band of the WDM filter 140. For example, in a case where the usable wavelength range in a relay section is 88 wavelengths of c-band, the uplink and the downlink are selected from among them. When the pass band of the port of the WDM filter 140 connected to a port 111-1 of the optical SW 110 is set to the 1st to 44th wavelengths and the pass band of the port of the WDM filter 140 connected to a port 111-2 of the optical SW 110 is set to the 45th to 88th wavelengths, there is a problem that the wavelength range that can be used in the uplink or the downlink is halved. As a result, since the subscriber device 105 performs communication using a wavelength not used in other communication including the relay section, narrowing the usable wavelength range leads to loss of communication opportunities.

In view of the above circumstances, an object of the present invention is to provide a technique capable of curbing the restriction on usable uplink and downlink wavelength ranges. The invention is defined by the appended independent claims. A selection of optional features of the invention is set out in the dependent claims.

### Solution to Problem

One aspect of the present invention is an optical communication system comprising: an optical switch configured to be connected to a plurality of optical transmission lines and output an optical signal input from any of the optical transmission lines to another optical transmission line; a transfer unit configured to convert simplex transmission into duplex transmission or converts duplex transmission into simplex transmission by multiplexing or demultiplexing an input optical signal between a subscriber device and the optical switch, and transfers the optical signal; an uplink/downlink determination unit configured to determine an uplink port and a downlink port among a plurality of ports included in the transfer unit on a basis of information on wavelengths used for the uplink and the downlink allocated to the subscriber device; and an optical switch control unit configured to control connection between ports of the optical switch according to a determination result of the uplink/downlink determination unit.

One aspect of the present invention is an optical communication method comprising connecting an optical switch a plurality of optical transmission lines, the optical switch outputting an optical signal input from any of the optical transmission lines to another optical transmission line; a transfer unit converting simplex transmission into duplex transmission or converting duplex transmission into simplex transmission by multiplexing or demultiplexing an input optical signal between a subscriber device and the optical switch, and transferring the optical signal; determining an uplink port and a downlink port among a plurality of ports included in the transfer unit on a basis of information on wavelengths used for the uplink and the downlink allocated to the subscriber device; and controlling connection between ports of the optical switch according to a determination result.

### Advantageous Effects of Invention

According to the present invention, it is possible to curb the restriction on usable uplink and downlink wavelength ranges.

### Brief Description of Drawings

Fig. 1 is a diagram illustrating a configuration example of an optical communication system according to a first reference example useful for understanding the present invention.
Fig. 2 is a sequence diagram illustrating a flow of processing of the optical communication system according to the the first reference example.
Fig. 3 is a diagram for describing a problem of conventional technology.
Fig. 4 is a diagram illustrating a configuration example of an optical communication system according to a second reference example useful for understanding the present invention.
Fig. 5 is a sequence diagram illustrating a flow of processing of the optical communication system according to the second the second reference example.
Fig. 6 is a diagram illustrating a configuration example of an optical communication system according to a first embodiment of the present invention.
Fig. 7 is a diagram illustrating an example of a connection relationship between other ports of an optical SW according to the first embodiment of the present invention.
Fig. 8 illustrates a configuration example of an optical communication system including a conventional optical communication device.

### Description of Embodiments

Hereinafter, embodiments of the present invention will be described with reference to drawings.

### (First Embodiment)

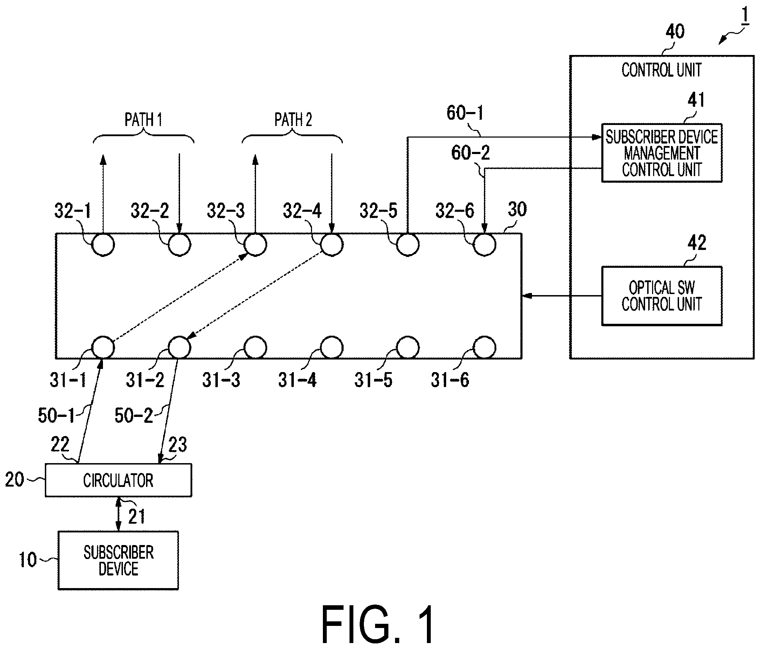

Fig. 1 is a diagram illustrating a configuration example of an optical communication system 1 according to a first embodiment. The optical communication system 1 includes one or more subscriber devices 10, a circulator 20, an optical SW 30, and a control unit 40. The subscriber device 10 and the circulator 20, the circulator 20 and the optical SW 30, and the optical SW 30 and the control unit 40 are connected by using an optical transmission line. The optical transmission line is, for example, an optical fiber. The circulator 20 and the optical SW 30 are examples of functional units forming the optical communication device.

The subscriber device 10 includes an optical transceiver. The optical transceiver is a wavelength-tunable optical transmitter/receiver. Therefore, the subscriber device 10 can perform communication using an arbitrary wavelength. The wavelength used for communication by the subscriber device 10 is allocated by the control unit 40. The optical transceiver may be an optical transceiver having an auxiliary management and control channel (AMCC) function. In this case, the wavelength used by the subscriber device 10 is controlled via a control signal superimposed by the AMCC. The subscriber device 10 is, for example, an optical network unit (ONU) installed in a subscriber's home.

The circulator 20 has at least three or more ports. In the following description, it is assumed that the circulator 20 has three ports (for example, first port 21, second port 22, and third port 23). The first port 21 of the circulator 20 is connected to the subscriber device 10 via an optical transmission line. The second port 22 of the circulator 20 is connected to the optical SW 30 via an optical transmission line 50-1. The third port 23 of the circulator 20 is connected to the optical SW 30 via an optical transmission line 50-2. An optical signal input to the first port 21 is output from the second port 22. An optical signal input to the second port 22 is output from the third port 23. An optical signal input to the third port 23 is output from the first port 21.

As described above, the circulator 20 has directivity and port selectivity, but no wavelength selectivity. Therefore, an optical signal output from the subscriber device 10 can be output to the optical SW 30 regardless of the wavelength of the optical signal. Further, the circulator 20 can transfer an optical signal transferred from the optical SW 30 to the subscriber device 10 regardless of the wavelength of the optical signal. The circulator 20 is one aspect of a transfer unit.

The optical SW 30 is an optical switch having M (M is integer of two or more) ports 31 and N (N is integer of two or more) ports 32. In the embodiment, the numbers of M and N are assumed to be six. An optical signal input to a certain port of the optical SW 30 is output from another port. For example, an optical signal input to the port 31 of the optical SW 30 is output from the port 32. In the optical SW 30, a connection relationship between the port 31 and the port 32 is set under the control of the control unit 40.

The second port 22 of the circulator 20 is connected to a port 31-1 of the optical SW 30 via the optical transmission line 50-1, the third port 23 of the circulator 20 is connected to a port 31-2 of the optical SW 30 via the optical transmission line 50-2, the control unit 40 is connected to a port 32-5 of the optical SW 30 via an optical transmission line 60-1, and the control unit 40 is connected to a port 32-6 of the optical SW 30 via an optical transmission line 60-2.

An optical transmission line for two-core connection to another device is connected to each of the pair of a port 32-1 and a port 32-2 and the pair of a port 32-3 and a port 32-4 of the optical SW 30. The other device is an optical SW, a circulator, or the like installed in a base different from the base where the optical SW 30 and the control unit 40 are installed.

The control unit 40 controls at least the subscriber device 10 and the optical SW 30. Here, the control of the subscriber device 10 is, for example, allocation of a light emission wavelength to the subscriber device 10, or a light stop instruction, a wavelength change instruction, or the like to the subscriber device 10. The control of the optical SW 30 is, for example, connection setting between ports of the optical SW 30, setting of an optical path, and the like.

The control unit 40 includes a subscriber device management control unit 41 and an optical SW control unit 42. The subscriber device management control unit 41 allocates a wavelength to the subscriber device 10. In a case where the subscriber device management control unit 41 allocates a wavelength to the subscriber device 10, the optical SW control unit 42 sets a path between ports of the optical SW 30 so as to connect the subscriber device 10 and the subscriber device management control unit 41.

The subscriber device management control unit 41 stores a management table. The management table includes information for identifying the subscriber devices 10, information regarding a wavelength allocated to each subscriber device 10, and information regarding the optical SW 30 to which the subscriber device 10 is connected (for example, information regarding port to which subscriber device 10 is connected).

The optical SW control unit 42 controls connection between ports of the optical SW 30. Specifically, the optical SW control unit 42 controls connection between ports of the optical SW 30 so that an optical signal transmitted from the subscriber device 10 is transferred to a subscriber device to be the transmission destination. For example, in a case where the subscriber device to be the transmission destination is connected to a path 2, the optical SW control unit 42 controls the connection between the ports so as to connect the port 31-1 and the port 32-3. Controlling the connection between the ports means setting a path so that a certain port and another port are connected.

Further, the optical SW control unit 42 controls connection between ports of the optical SW 30 so that an optical signal addressed to the subscriber device 10 is transferred to the subscriber device 10. For example, in a case where a communication target subscriber device is connected to the path 2, the optical SW control unit 42 controls connection between the ports so as to connect the port 31-2 and the port 32-4. The control unit 40 includes one or more processors. Note that each functional unit included in the control unit 40 is implemented by mounting the control unit 40 on one server.

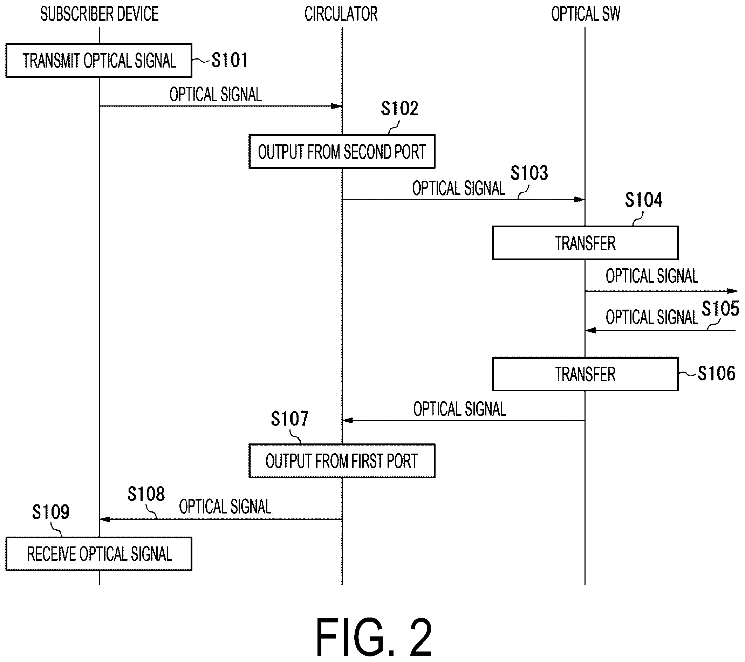

Fig. 2 is a sequence diagram illustrating a flow of processing of the optical communication system 1 according to the first embodiment. Note that at the start of the processing of Fig. 2, the connection relationship between ports of the optical SW 30 is set as illustrated in Fig. 1.

An optical transceiver of the subscriber device 10 transmits an optical signal of the wavelength allocated by the control unit 40 (step S101). The optical signal transmitted from the subscriber device 10 is input to the first port 21 of the circulator 20 via the optical transmission line. The optical signal input to the first port 21 of the circulator 20 is output from the second port 22 (step S102). The optical signal output from the second port 22 of the circulator 20 is input to the port 31-1 of the optical SW 30 via the optical transmission line 50-1 (step S103).

The port 31-1 of the optical SW 30 is connected to the port 32-3. Therefore, the optical signal input to the port 31-1 of the optical SW 30 is output from the port 32-3. In this manner, the optical SW 30 transfers the input optical signal to another device (step S104). Assume that a response to the optical signal transferred to the other device is input to the port 32-4 of the optical SW 30 (step S105).

The port 32-4 of the optical SW 30 is connected to the port 31-2. Therefore, the optical signal input to the port 32-4 of the optical SW 30 is output from the port 31-2. In this manner, the optical SW 30 transfers the input optical signal to the other device (step S106). The optical signal output from the port 31-2 of the optical SW 30 is input to the third port 23 of the circulator 20. The optical signal input to the third port 23 of the circulator 20 is output from the first port 21 (step S107).

The optical signal output from the first port 21 of the circulator 20 is input to the subscriber device 10 via the optical transmission line 50-2 (step S108). As a result, the subscriber device 10 receives the optical signal (step S109).

According to the optical communication system 1 configured as described above, it is possible to curb the restriction on usable uplink and downlink wavelength ranges. Specifically, in the optical communication system 1, the circulator 20 is used as a conversion unit from simplex to duplex between the subscriber device 10 and the optical SW 30. Since use of the circulator 20 prevents interference between uplink signals and downlink signals, the same wavelength can be used for the uplink and the downlink. Therefore, it is possible to curb the restriction on usable uplink and downlink wavelength ranges. The optical communication system 1 according to the present reference example does not include the uplink/downlink determination unit 43 of the present invention and is therefore not part of the claimed invention.

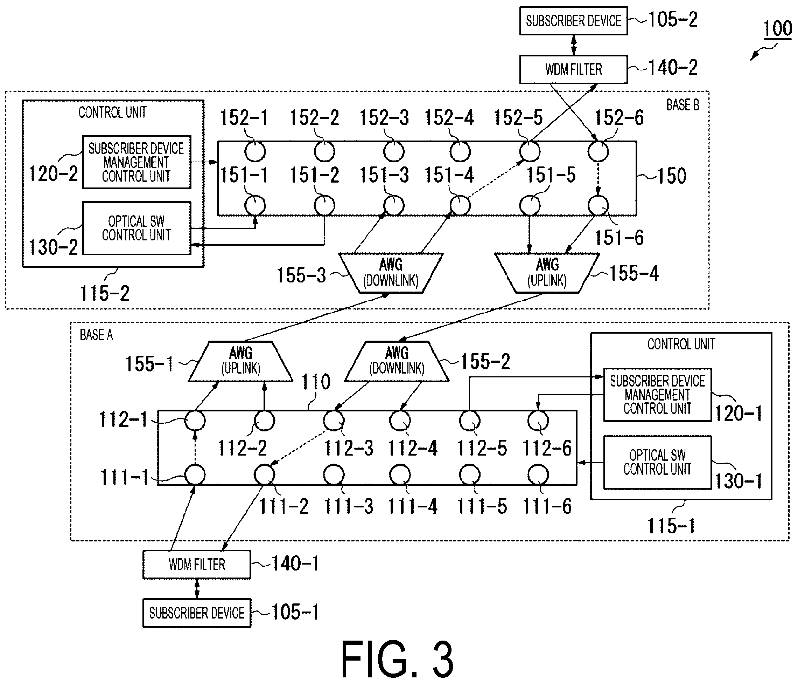

Conventionally, as illustrated in Fig. 3, in a case where communication is performed between a subscriber device 105-1 installed in a base A and a subscriber device 105-2 installed in a base B, with respect to the subscriber device 105-1 installed in the base A, the pass band of the subscriber device 105-2 installed in the base B needs to be inverted from the pass band of a WDM filter 140-1 connected to the subscriber device 105-1. That is, the pass band of the uplink signal of the subscriber device 105-1 needs to be set to the pass band of the downlink signal in a WDM filter 140-2 connected to the subscriber device 105-2, and the pass band of the downlink signal of the subscriber device 105-1 needs to be set to the pass band of the uplink signal in the WDM filter 140-2. For this reason, the uplink wiring and the downlink wiring for converting simplex and duplex are different for each base, which leads to complication of field work. On the other hand, in the optical communication system 1 according to the first embodiment, by using a circulator instead of the WDM filter, since the same uplink and downlink wirings can be used at each base, it is possible to eliminate the complexity of the field wiring work.

Further, a case where the subscriber device 105-1 installed in the base A, the subscriber device 105-2 installed in the base B, and a subscriber device 105-3 (not illustrated) installed in a base C communicate with each other will be considered. For example, when the WDM filter 140-2 and a WDM filter 140-3 connected to the subscriber device 105-3 invert the pass band with respect to the pass band of the WDM filter 140-1, communication can be performed between the subscriber device 105-1 and the subscriber device 105-2 and between the subscriber device 105-1 and the subscriber device 105-3, but communication cannot be performed between the subscriber device 105-2 and the subscriber device 105-3. That is, there has also been a problem that communication between arbitrary two subscriber devices cannot be provided in a case where three or more subscriber devices are present. On the other hand, in the optical communication system 1 according to the first embodiment, by using the circulator, the same uplink and downlink wirings can be used at each base, and even in a situation where three or more subscriber devices are present, an optical signal can be transferred to a subscriber device regardless of the wavelength, so that communication between arbitrary two subscriber devices can be achieved.

### Second Reference Example

In a second reference example, a configuration in which a circulator is provided on the side of a port 32 of an optical SW 30 (between optical SW 30 and another device) will be described.

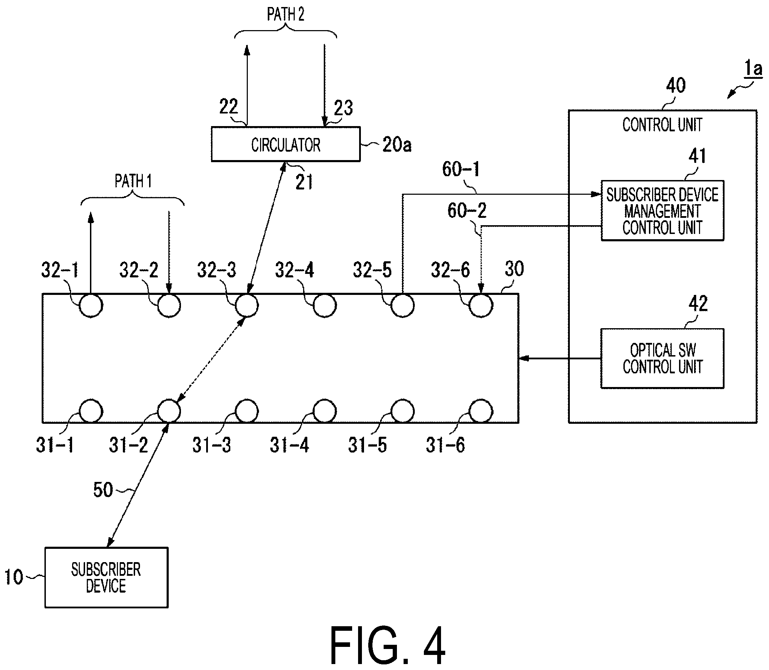

Fig. 4 is a diagram illustrating a configuration example of an optical communication system 1a according to the second reference example. The optical communication system 1a includes one or more subscriber devices 10, a circulator 20a, an optical SW 30, and a control unit 40. The subscriber device 10 and the optical SW 30, the circulator 20a and the optical SW 30, and the optical SW 30 and the control unit 40 are connected by using an optical transmission line. The circulator 20a and the optical SW 30 are examples of functional units forming the optical communication device.

The optical communication system 1a is different from the optical communication system 1 in that the circulator 20a is connected not between the subscriber device 10 and the optical SW 30 but on the side of the port 32 of the optical SW 30. Other configurations of the optical communication system 1a are similar to those of the optical communication system 1. Therefore, differences from the optical communication system 1 will be described.

A first port 21 of the circulator 20a is connected to the port 32 (port 32-3 in Fig. 4) of the optical SW 30 via an optical transmission line. A second port 22 and the third port 23 of the circulator 20 are connected to an optical transmission line (path 2 in Fig. 4) connected to another device.

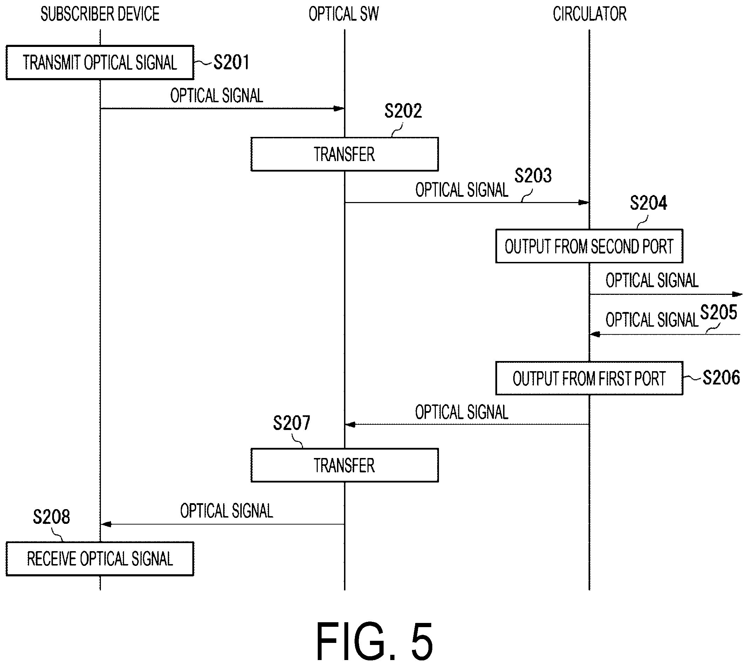

Fig. 5 is a sequence diagram illustrating a flow of processing of the optical communication system 1a according to the second embodiment. Note that at the start of the processing of Fig. 5, the connection relationship between ports of the optical SW 30 is set as illustrated in Fig. 4.

An optical transceiver of the subscriber device 10 transmits an optical signal of the wavelength allocated by the control unit 40 (step S201). The optical signal transmitted from the subscriber device 10 is input to a port 31 of the optical SW 30 via the optical transmission line. In the example illustrated in Fig. 4, the subscriber device 10 is connected to a port 31-2 of the optical SW 30 via an optical transmission line 50. Therefore, the optical signal transmitted from the subscriber device 10 is input to the port 31-2 of the optical SW 30 via the optical transmission line 50.

The port 31-1 of the optical SW 30 is connected to the port 32-3. Therefore, the optical signal input to the port 31-1 of the optical SW 30 is output from the port 32-3. Since the first port 21 of the circulator 20a is connected to the port 32-3, the optical SW 30 transfers the input optical signal to the first port 21 of the circulator 20a (step S203). The optical signal input to the first port 21 of the circulator 20a is output from the second port 22 (step S204).

The optical signal output from the second port 22 of the circulator 20a is transferred to another device via the optical transmission line. Assume that a response to the optical signal transferred to the other device is input to the third port 23 of the circulator 20a (step S205). The optical signal input to the third port 23 of the circulator 20a is output from the first port 21 (step S206).

The optical signal output from the first port 21 of the circulator 20 is input to the port 32-3 of the optical SW 30 via the optical transmission line. The optical signal input to the port 32-3 of the optical SW 30 is output from the port 31-2. The optical signal output from the port 31-2 of the optical SW 30 is input to the subscriber device 10 via the optical transmission line 50. In this manner, the optical SW 30 transfers the input optical signal to the subscriber device 10. As a result, the subscriber device 10 receives the optical signal (step S208).

According to the optical communication system 1a configured as described above, it is possible to reduce the number of ports required for the optical SW 30 at the time of transferring an optical signal, as compared with the first reference example. Specifically, in the optical communication system 1 according to the first reference example, the circulator 20 and the optical SW 30 are connected by the two-core optical transmission line, and the side of the port 32 of the optical SW 30 is also connected by the two-core optical transmission line. On the other hand, in the optical communication system 1a according to the second embodiment, the subscriber device 10 and the optical SW 30 are connected by a simplex optical transmission line, and the port 32 of the optical SW 30 and the circulator 20a are connected by a simplex optical transmission line. As a result, it is possible to reduce the number of ports required for the optical SW 30 at the time of transferring the optical signal.

### (First Embodiment)

In a first embodiment, a configuration in which a WDM filter is provided between a subscriber device 10 and an optical SW 30, and whether each port included in the WDM filter is an uplink port or a downlink port is changed depending on the wavelength range will be described. In the following description, a direction from the subscriber device 10 toward the optical SW 30 will be referred to as an uplink direction, and a direction from the optical SW 30 toward the subscriber device 10 will be referred to as a downlink direction.

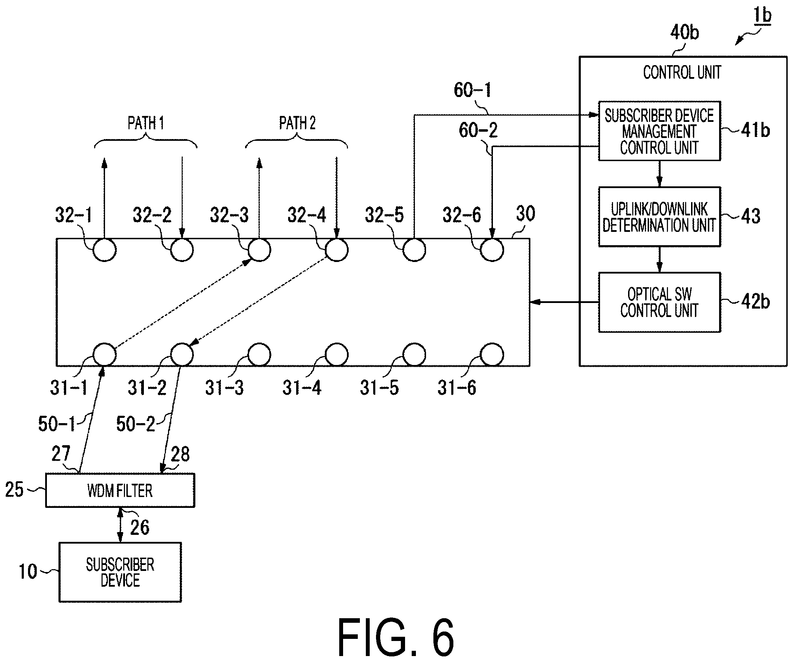

Fig. 6 is a diagram illustrating a configuration example of an optical communication system 1b according to the first embodiment. The optical communication system 1b includes one or more subscriber devices 10, a WDM filter 25, an optical SW 30, and a control unit 40b. The subscriber device 10 and the WDM filter 25, the WDM filter 25 and the optical SW 30, and the optical SW 30 and the control unit 40b are connected by using an optical transmission line. The WDM filter 25 and the optical SW 30 are examples of functional units forming the optical communication device.

The optical communication system 1b is different from the optical communication system 1 in that the WDM filter 25 is provided instead of the circulator 20 and the control unit 40b is provided instead of the control unit 40. Other configurations of the optical communication system 1b are similar to those of the optical communication system 1. Therefore, differences from the optical communication system 1 will be described.

The control unit 40b includes a subscriber device management control unit 41b, an optical SW control unit 42b, and an uplink/downlink determination unit 43. The subscriber device management control unit 41b allocates a wavelength to the subscriber device 10. Further, the subscriber device management control unit 41b holds information on the pass band of each port (for example, second port 27 and third port 28) of the WDM filter 25. After allocating the uplink wavelength and the downlink wavelength to the subscriber device 10, the subscriber device management control unit 41b notifies the uplink/downlink determination unit 43 of information regarding the allocated wavelengths (hereinafter referred to as "wavelength information").

The uplink/downlink determination unit 43 determines an uplink port and a downlink port among the plurality of ports included in the WDM filter 25 on the basis of the wavelength information notified from the subscriber device management control unit 41b. Incidentally, it is assumed that the uplink/downlink determination unit 43 holds in advance information of a port 31 of the optical SW 30 to which each port included in the WDM filter 25 is connected.

In the case of the configuration illustrated in Fig. 6, the uplink/downlink determination unit 43 holds information indicating that the second port 27 of the WDM filter 25 is connected to a port 31-1 of the optical SW 30 and the third port 28 of the WDM filter 25 is connected to a port 31-2 of the optical SW 30. Information on the port 31 of the optical SW 30 to which each port of the WDM filter 25 is connected may be set in the control unit 40b by the administrator in advance.

The optical SW control unit 42b controls the connection between ports of the optical SW 30 according to the determination result of the uplink/downlink determination unit 43. Specifically, the optical SW control unit 42b controls the connection between ports of the optical SW 30, so that the port 31 of the optical SW 30 to which the port (for example, second port 27 or third port 28) of the WDM filter 25 whose pass band is the uplink wavelength is connected is connected to the uplink port 32. Further, specifically, the optical SW control unit 42b controls the connection between ports of the optical SW 30, so that the port 31 of the optical SW 30 to which the port (for example, second port 27 or third port 28) of the WDM filter 25 whose pass band is the downlink wavelength is connected is connected to the downlink port 32.

Specific processing of the optical communication system 1b will be described according to an example. Assume that the wavelength range available in the relay section is 88 wavelengths of c-band, and the uplink wavelength and the downlink wavelength are selected from 88 wavelengths of c-band. The pass band of the WDM filter 25 is set to the 1st to 44th wavelengths in the second port 27 and the 45th to 88th wavelengths in the third port 28. Here, in a case where the subscriber device management control unit 41b allocates the wavelength 10 as the uplink wavelength and the wavelength 50 as the downlink wavelength to the subscriber device 10, the uplink/downlink determination unit 43 determines that the second port 27 of the WDM filter 25 is the uplink port and the third port 28 of the WDM filter 25 is the downlink port. The uplink/downlink determination unit 43 notifies the optical SW control unit 42b of the determination result.

The optical SW control unit 42b controls the connection between ports of the optical SW 30, so that the port 31-1 of the optical SW 30 to which the second port 27 of the WDM filter 25 is connected is connected to an uplink port 32-3 according to the determination result notified from the uplink/downlink determination unit 43. Further, the optical SW control unit 42b controls the connection between ports of the optical SW 30, so that the port 31-2 of the optical SW 30 to which the third port 28 of the WDM filter 25 is connected is connected to a downlink port 32-4 according to the determination result notified from the uplink/downlink determination unit 43.

The WDM filter 25 is an optical coupler (optical multiplexer/demultiplexer) that multiplexes or demultiplexes the input optical signals. The WDM filter 25 has three ports (for example, first port 26, second port 27, and third port 28). The first port 26 of the WDM filter 25 is connected to the subscriber device 10 via an optical transmission line. The second port 27 of the WDM filter 25 is connected to the optical SW 30 via an optical transmission line 50-1. The third port 28 of the WDM filter 25 is connected to the optical SW 30 via an optical transmission line 50-2.

An optical signal input to the first port 26 is output from the second port 27 or the third port 28 depending on the wavelength. Assume that the pass bands of the wavelengths in the second port 27 and the third port 28 of the WDM filter 25 are set in advance. An optical signal input from the second port 27 or the third port 28 is multiplexed and output from the first port 26.

In a case where the second port 27 and the third port 28 of the WDM filter 25 are connected to arbitrary ports of the optical SW 30, it is necessary to separately set the port information in the uplink/downlink determination unit 43. Alternatively, it is also conceivable to use an operation rule in which the second port 27 and the third port 28 of the WDM filter 25 are connected to, for example, a port 31-(x+1) and a port 31-(x+2) (x is integer of zero or more) of the optical SW 30. In this case, the uplink/downlink determination unit 43 determines which of the port 31-(x+1) and the port 31-(x+2) is to be the uplink or the downlink, and there is no need to separately set the port information. The WDM filter 25 is one aspect of a transfer unit.

Next, another example of specific processing of the optical communication system 1b will be described. In a case where the subscriber device management control unit 41b allocates the wavelength 60 as the uplink wavelength and the wavelength 20 as the downlink wavelength to the subscriber device 10, the uplink/downlink determination unit 43 determines that the second port 27 of the WDM filter 25 is the downlink port and the third port 28 of the WDM filter 25 is the uplink port. The uplink/downlink determination unit 43 notifies the optical SW control unit 42b of the determination result.

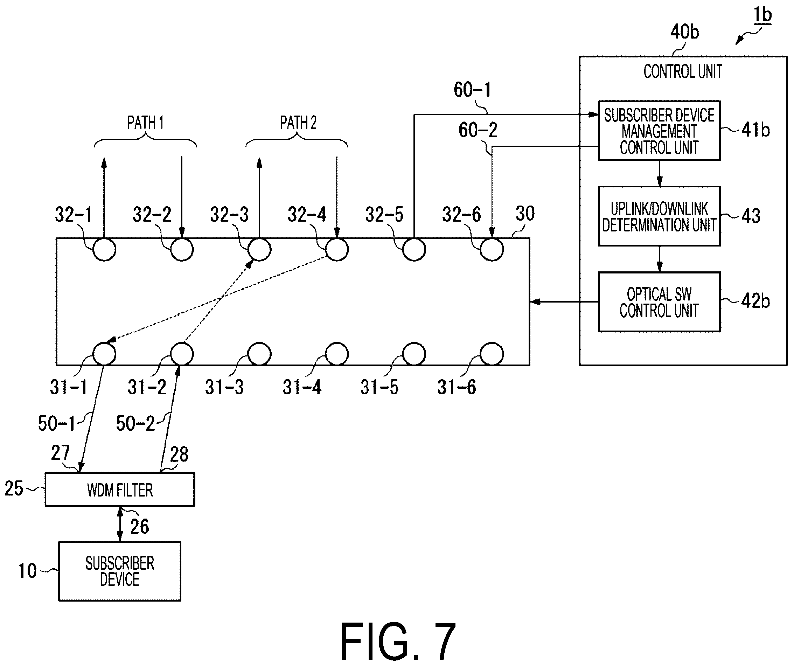

The optical SW control unit 42b controls the connection relationship between ports of the optical SW 30 as illustrated in Fig. 7 according to the determination result notified from the uplink/downlink determination unit 43. Fig. 7 is a diagram illustrating an example of a connection relationship between other ports of the optical SW 30 according to the first embodiment. The optical SW control unit 42b controls the connection between ports of the optical SW 30, so that the port 31-1 of the optical SW 30 to which the second port 27 of the WDM filter 25 is connected is connected to the downlink port 32-4. Further, the optical SW control unit 42b controls the connection between ports of the optical SW 30, so that the port 31-2 of the optical SW 30 to which the third port 28 of the WDM filter 25 is connected is connected to the uplink port 32-3 according to the determination result notified from the uplink/downlink determination unit 43.

Conventionally, the uplink wavelength or the downlink wavelength is selected from one pass band, but in the optical communication system 1b configured as described above, the uplink wavelength or the downlink wavelength can be selected from both pass bands, so that the usable wavelength range is expanded as compared with the conventional method. Further, since the same uplink and downlink wirings of the WDM filter 25 can be used at each base and the uplink and downlink can be remotely changed by the optical SW 30, it is possible to eliminate the complexity of the local wiring work. Further, even in a situation where there are three or more subscriber devices, since an optical signal can be transferred to the subscriber device regardless of the wavelength, communication between arbitrary subscriber devices can be achieved.

In the conventional configuration as illustrated in Fig. 3, in a case where a plurality of wavelengths is multiplexed and demultiplexed by AWG with simplex relay, it is not necessary to determine the uplink and the downlink. In the first embodiment, in a case of duplex relay and the uplink and the downlink are transmitted through different optical transmission lines, it is necessary to determine and control the uplink and the downlink.

### (Modification common to First and Second Reference Examples

In the first and second examples, the description has been given on the assumption that the relay section is duplex, but the these reference examples are also applicable to a case where the relay section is simplex. Even in a case where the relay is simplex, in a case where signals of a plurality of subscriber devices are multiplexed by the AWG, it is necessary to separate the uplink and the downlink once as described above, and the configurations described in the first reference example and the second reference example may be used for the separation.

Some functional units of the control units 40 and 40b in the above-described embodiments may be implemented by a computer. In that case, a program for implementing the functions may be recorded in a computer-readable recording medium, and the program recorded in the recording medium may be read and executed by a computer system to implement the functions. Note that the "computer system" mentioned herein includes an OS and hardware such as peripheral devices.

In addition, the "computer-readable recording medium" refers to a portable medium such as a flexible disk, a magneto-optical disc, a ROM, or a CD-ROM or a storage device such as a hard disk included in the computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside the computer system serving as a server or a client in that case. The above program may be for implementing some of the functions described above, may implement the functions described above by a combination with a program already recorded in the computer system, or may be implemented by using a programmable logic device such as an FPGA.

### Industrial Applicability

The present invention can be applied to optical communication systems.

### Reference Signs List

- 10: Subscriber device
- 20, 20a: Circulator
- 25: WDM filter
- 30: Optical SW
- 40, 40b: Control unit
- 41, 41b: Subscriber device management control unit
- 42, 42b: Optical SW control unit
- 43: uplink/downlink determination unit

## Claims

1. An optical communication system (1b) comprising:
an optical switch (30) configured to be connected to a plurality of optical transmission lines and output an optical signal input from any of the optical transmission lines to another optical transmission line;
a transfer unit (25) configured to convert simplex transmission into duplex transmission or convert duplex transmission into simplex transmission by multiplexing or demultiplexing an input optical signal between a subscriber device and the optical switch (30), and transfer the optical signal between the subscriber device and the optical switch;
**characterized in that** it comprises:
an uplink/downlink determination unit (43) configured to determine an uplink port and a downlink port among a plurality of ports included in the transfer unit (25) on a basis of information on wavelengths used for the uplink and the downlink allocated to the subscriber device; and
an optical switch control unit (42b) configured to control connection between ports of the optical switch (30) according to a determination result of the uplink/downlink determination unit (43).

2. The optical communication system (1b) according to claim 1, wherein
the optical switch control unit (42b) is configured to control the connection between the ports of the optical switch (30) so that a port of the optical switch (30), to which a port of the transfer unit (25) whose pass band is an uplink wavelength is connected, is connected to the uplink port, and control the connection between ports of the optical switch (30) so that a port of the optical switch (30), to which a port of the transfer unit (25) whose pass band is a downlink wavelength is connected, is connected to the downlink port.

3. The optical communication system (1b) according to claims 1 and 2,
a port of the optical switch connected to the subscriber device via the transfer unit (25) is defined as a first port, and a port opposite to the first port is defined as a second port,
the optical communication system (1b) further comprising, on a side of the second port of the optical switch (30), a wavelength multiplexer/demultiplexer (155) configured to multiplex or demultiplex an input optical signal, wherein
an uplink optical signal and a downlink optical signal are transmitted by simplex transmission.

4. An optical communication method comprising:
connecting (S104 to S106) an optical switch a plurality of optical transmission lines, the optical switch outputting an optical signal input from any of the optical transmission lines to another optical transmission line;
a transfer unit converting simplex transmission into duplex transmission or converting duplex transmission into simplex transmission by multiplexing or demultiplexing an input optical signal between a subscriber device and the optical switch, and transferring the optical signal between the subscriber device and the optical switch;
**characterized in that** it comprises:
determining an uplink port and a downlink port among a plurality of ports included in the transfer unit on a basis of information on wavelengths used for the uplink and the downlink allocated to the subscriber device; and
controlling connection between ports of the optical switch according to a determination result.

## Patentansprüche

1. Optisches Kommunikationssystem (1b), umfassend:
einen optischen Schalter (30), der so eingerichtet ist, dass er mit einer Vielzahl von optischen Übertragungsleitungen verbunden werden kann und einen optischen Signaleingang von einer der optischen Übertragungsleitungen zu einer anderen optischen Übertragungsleitung ausgibt;
eine Übertragungseinheit (25), die so eingerichtet ist, dass sie eine Simplex-Übertragung in eine Duplex-Übertragung umwandelt oder eine Duplex-Übertragung in eine Simplex-Übertragung umwandelt, indem sie ein optisches Eingangssignal zwischen einer Teilnehmervorrichtung und dem optischen Schalter (30) multiplexiert oder demultiplexiert, und das optische Signal zwischen der Teilnehmervorrichtung und dem optischen Schalter überträgt;
**dadurch gekennzeichnet, dass** es umfasst:
eine Uplink-/Downlink-Bestimmungseinheit (43), die so eingerichtet ist, dass sie einen Uplink-Port und einen Downlink-Port unter einer Vielzahl von in der Übertragungseinheit (25) enthaltenen Ports auf der Grundlage von Informationen über die für den Uplink und den Downlink verwendeten Wellenlängen, die der Teilnehmervorrichtung zugewiesen sind, bestimmt; und
eine Steuereinheit (42b) für einen optischen Schalter, die so eingerichtet ist, dass sie die Verbindung zwischen Ports des optischen Schalters (30) gemäß einem Bestimmungsergebnis der Uplink-/Downlink-Bestimmungseinheit (43) steuert.

2. Optisches Kommunikationssystem (1b) nach Anspruch 1, wobei
die Steuereinheit (42b) für einen optischen Schalter so eingerichtet ist, dass sie die Verbindung zwischen den Ports des optischen Schalters (30) steuert, sodass ein Port des optischen Schalters (30), an den ein Port der Übertragungseinheit (25) angeschlossen ist, dessen Passband eine Uplink-Wellenlänge ist, mit dem Uplink-Port verbunden wird, und die Verbindung zwischen Ports des optischen Schalters (30) steuert, sodass ein Port des optischen Schalters (30), an den ein Port der Übertragungseinheit (25) angeschlossen ist, dessen Passband eine Downlink-Wellenlänge ist, mit dem Downlink-Port verbunden wird.

3. Optisches Kommunikationssystem (1b) nach den Ansprüchen 1 und 2,
wobei ein Port des optischen Schalters, der über die Übertragungseinheit (25) mit der Teilnehmervorrichtung verbunden ist, als erster Port definiert ist, und ein dem ersten Port gegenüberliegender Port als zweiter Port definiert ist,
wobei das optische Kommunikationssystem (1b) ferner auf einer Seite des zweiten Ports des optischen Schalters (30) einen Wellenlängen-Multiplexer/Demultiplexer (155) umfasst, der so eingerichtet ist, dass er ein optisches Eingangssignal multiplexiert oder demultiplexiert, wobei
ein optisches Uplink-Signal und ein optisches Downlink-Signal per Simplex-Übertragung übertragen werden.

4. Optisches Kommunikationsverfahren, umfassend:
Verbinden (S104 bis S106) eines optischen Schalters einer Vielzahl von optischen Übertragungsleitungen, wobei der optische Schalter einen optischen Signaleingang von einer der optischen Übertragungsleitungen zu einer anderen optischen Übertragungsleitung ausgibt;
eine Übertragungseinheit, die eine Simplex-Übertragung in eine Duplex-Übertragung umwandelt oder eine Duplex-Übertragung in eine Simplex-Übertragung umwandelt, indem sie ein optisches Eingangssignal zwischen einer Teilnehmervorrichtung und dem optischen Schalter multiplexiert oder demultiplexiert, und das optische Signal zwischen der Teilnehmervorrichtung und dem optischen Schalter überträgt;
**dadurch gekennzeichnet, dass** es umfasst:
Bestimmen eines Uplink-Ports und eines Downlink-Ports unter einer Vielzahl von in der Übertragungseinheit enthaltenen Ports auf der Grundlage von Informationen über die für den Uplink und den Downlink verwendeten Wellenlängen, die der Teilnehmervorrichtung zugewiesen sind; und
Steuern der Verbindung zwischen Ports des optischen Schalters gemäß einem Bestimmungsergebnis.

## Revendications

1. Système de communication optique (1b) comportant :
un commutateur optique (30) configuré pour être connecté à une pluralité de lignes de transmission optique et délivrer un signal optique entré à partir de l'une quelconque des lignes de transmission optique vers une autre ligne de transmission optique ;
une unité de transfert (25) configurée pour convertir une transmission simplex en transmission duplex ou convertir une transmission duplex en transmission simplex en multiplexant ou démultiplexant un signal optique entré entre un dispositif d'abonné et le commutateur optique (30), et transférer le signal optique entre le dispositif d'abonné et le commutateur optique ;
**caractérisé en ce qu'**il comporte :
une unité de détermination de liaison montante/liaison descendante (43) configurée pour déterminer un port de liaison montante et un port de liaison descendante parmi une pluralité de ports inclus dans l'unité de transfert (25) sur la base d'informations sur les longueurs d'onde utilisées pour la liaison montante et la liaison descendante attribuées au dispositif d'abonné ; et
une unité de commande de commutateur optique (42b) configurée pour commander la connexion entre des ports du commutateur optique (30) selon un résultat de détermination de l'unité de détermination de liaison montante/liaison descendante (43).

2. Système de communication optique (1b) selon la revendication 1, dans lequel
l'unité de commande de commutateur optique (42b) est configurée pour commander la connexion entre les ports du commutateur optique (30) de sorte qu'un port du commutateur optique (30), auquel est connecté un port de l'unité de transfert (25) dont la bande passante est une longueur d'onde de liaison montante, soit connecté au port de liaison montante, et commander la connexion entre des ports du commutateur optique (30) de sorte qu'un port du commutateur optique (30), auquel est connecté un port de l'unité de transfert (25) dont la bande passante est une longueur d'onde de liaison descendante, soit connecté au port de liaison descendante.

3. Système de communication optique (1b) selon les revendications 1 et 2,
un port du commutateur optique connecté au dispositif d'abonné via l'unité de transfert (25) est défini comme un premier port, et un port opposé au premier port est défini comme un deuxième port,
le système de communication optique (1b) comportant en outre, sur un côté du deuxième port du commutateur optique (30), un multiplexeur/démultiplexeur de longueur d'onde (155) configuré pour multiplexer ou démultiplexer un signal optique entré, dans lequel
un signal optique de liaison montante et un signal optique de liaison descendante sont transmis par transmission simplex.

4. Procédé de communication optique comportant :
la connexion (S104 à S106) d'un commutateur optique à une pluralité de lignes de transmission optique, le commutateur optique délivrant un signal optique entré à partir de l'une quelconque des lignes de transmission optique vers une autre ligne de transmission optique ;
une unité de transfert convertissant une transmission simplex en transmission duplex ou convertissant une transmission duplex en transmission simplex en multiplexant ou démultiplexant un signal optique entré entre un dispositif d'abonné et le commutateur optique, et transférant le signal optique entre le dispositif d'abonné et le commutateur optique ;
**caractérisé en ce qu'**il comporte :
la détermination d'un port de liaison montante et d'un port de liaison descendante parmi une pluralité de ports inclus dans l'unité de transfert sur la base d'informations sur les longueurs d'onde utilisées pour la liaison montante et la liaison descendante attribuées au dispositif d'abonné ; et
la commande de la connexion entre des ports du commutateur optique selon un résultat de détermination.
